# EUROPEAN PATENT SPECIFICATION

(11) **EP 2 229 822 B1**
(45) Date of publication and mention of the grant of the patent: **18.06.2014**
(21) Application number: 09167148.7
(22) Date of filing: 04.08.2009
(51) Int. Cl.: A23L 1/00, A23L 1/0528, A23L 1/164, A23L 1/308

(54) **Food particle for promoting wellness**
Nahrungsmittelpartikel zur Förderung des Wohlbefindens
Particule alimentaire pour la promotion du bien-être

(30) Priority: 04.08.2008 US 86054 P; 06.03.2009 US 158140 P
(43) Date of publication of application: 22.09.2010
(73) Proprietor: Cereal Ingredients Inc., Leavenworth KS 66048 (US)
(72) Inventor: Frick, Jim, White Bear Lake, MN 55110 (US); Bussinger, Brent L., Leavenworth, KS 66048 (US)
(74) Representative: Barton, Matthew Thomas

(56) References cited:
- WO-A1-2006/020029
- WO-A2-2007/100766
- US-A1- 2005 100 652
- US-A1- 2005 170 065
- US-A1- 2006 008 563
- US-A1- 2009 155 448
- US-B2- 6 579 560
- US-B2- 6 726 943
- REDONDO-CUENCA ET AL: "Soybean seeds and its by-product okara as sources of dietary fibre. Measurement by AOAC and Englyst methods", FOOD CHEMISTRY, ELSEVIER LTD, NL, vol. 108, no. 3, 4 December 2007 (2007-12-04), pages 1099-1105, XP022461522, ISSN: 0308-8146, DOI: DOI:10.1016/J.FOODCHEM.2007.11.061

## Description

### FIELD

Embodiments described herein include an extruded food product according to claim 1. Embodiments also include an extruded food product according to claim 6.

### BACKGROUND

Whole grains have been noted by the FDA as being better sources of carbohydrates than refined flours and flours that do not contain all elements of the particular whole grain. Whole grain flours have been extruded into crisps and nuggets used in snacks and some RTE foods.

Prebiotics cannot be digested by enzymes of the upper gastrointestinal tract. Instead, they are fermented by some types of intestinal bacteria in the large intestine. Ingestion of prebiotics produces a shift in the composition of the intestinal bacterial population, by increasing populations of *Lactobacillus* and *Bifidobacterium* species. This shift in bacterial population types increases the microbiota of the intestine associated with improved health, reduced gut infections, increased levels of intestinal short chain fatty acids, better absorption of minerals, and suppression of colon cancer initiation.

### IN THE DRAWINGS

Figures 1-3 illustrate side views of one prior art rotating plate system.
Figure 4 illustrates a top plan view of one crisp embodiment.
Figure 5 illustrates a top plant view of one ball embodiment.
Figure 6 illustrates a side view of one nugget embodiment.
Figure 7 is another nugget shape.

### DETAILED DESCRIPTION

US 2009/155448 discloses proteic extrudates comprising soy protein, fat and carbohydrates.

US 2005/100652 A1 discloses soy-based RTE low-fat high-protein snacks comprising soy protein but no oat fibres nor inulin.

US 2006/008563 A1 discloses a dough made inter alia of soy protein and various fibres among them oat fibres and inulin. The dough may be extruded.

US 2005/170065 A1 discloses soy noodles that do not contain inulin nor oat fibres.

WO 2007/100766 discloses health bars comprising soy protein, inulin and oat fibres, however the oat fibres are soluble.

WO 2006/020029 discloses fried snacks made of soy protein and various carbohydrates. Inulin is not present.

US 6 726 943 B2 discloses nutritious snacks comprising soy protein, inulin and oat fibres, yet the oat fibres are of the soluble type.

Embodiments described herein include extruded food products according to claim 1. For some preferred embodiments, the extruded food products include up to about 30% protein, up to about 15% insoluble fiber and up to about 15% soluble fiber. For other preferred embodiments, the food products have an insoluble fiber concentration of at least 7.5% by weight. The soluble fiber concentration in these embodiments is at least 7.5% by weight. The protein concentration is no more than five grams of protein per each forty gram serving on an RTE basis. Other preferred embodiments are described herein.

Certain terminology is used in the following description for convenience only and is not limiting.

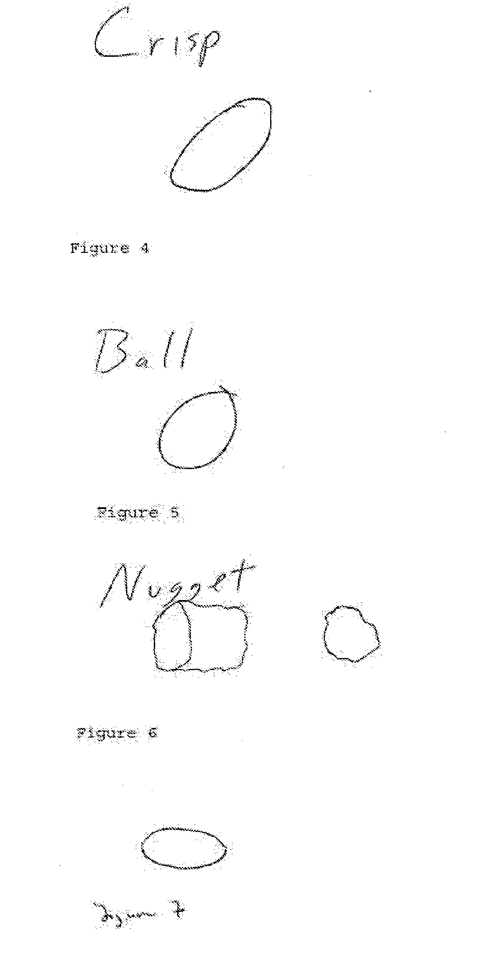

The term, "cluster" as used herein, refers to an aggregation of edible particles, bound by an edible binder. Examples of edible food clusters are shown in Figures 4, 5, and 6.

The term, "expanded crisp," as used herein, refers to an edible food particle that has a mouthfeel that is firm but the particle is easily broken or crumbled. The expanded crisp defines air cells within the crisp. One crisp embodiment is shown in FIG. 4

The term, " ball," as used herein refers to a food particle or a cluster having a ball-shape. One ball embodiment is shown in FIG. 5

The term, "nugget," as used herein, refers to a small piece of food. One nugget embodiment is shown in FIG. 6.

The term, "RTE," refers to a food that is Ready to Eat. Ready to Eat foods do not require any further preparation before consumption.

The protein in the extruded food product is a soy protein isolate.

The insoluble fiber is oat-derived.

The soluble fiber is inulin. The inulin is obtained from one or more of chicory root, leek, onioin, garlic, wheat rye, dandelion, burdock, camas, murnong, salsify, artichoke, banana, Dahlia, yacon, Jerusalem artichoke, bacterial inulin, and other vegetables and fruits that include inulin. For some preferred embodiment, extruded food particles and food clusters that include the food particles include about 0.15 to 15% inulin. Inulin or equally suitable fructooligosaccharides ("FOS") ingredients provide the benefits of soluble fiber without the adverse organoleptic or allergen features of such other soluble fiber materials such as oat bran, Psyllium, beta glucan, and guar gum. Moreover, it is believed that inulin and/or FOS materials facilitate the absorption of calcium when provided in the form of calcium phosphate salts. It is an advantage herein that inulin and FOS materials behave in a manner similar to sugars which allows for ease of use and incorporation. Also, inulin's bland flavor makes inulin particularly suitable for use in children's products since children are notoriously sensitive to off flavors

The extruded food product embodiments that include protein, soluble fiber and insoluble fiber have sizes that include expanded crisps, balls, or nuggets and other types of particles. It is believed that the prebiotic fiber and insoluble fiber promote a healthy gut.

The term, "inulin" as used herein, refers to a heterogeneous blend of fructose polymers found widely distributed in nature as plant storage carbohydrates. Oligofructose is a sub-group of inulin including polymers with a degree of polymerization (DP) of 10 or less. Inulin and oligofructose are not digested and as such possess dietary fiber effects; reduced caloric content; stimulate the growth of beneficial bifidobacteria; enhance calcium absorption and do not increase serum glucose levels. Several different commercial grades of inulin are available which have a neutral, clean flavor and can improve the mouthfeel, stability and acceptability of low fat foods. The texturizing attributes are based on the ability of inulin to form gels composed of microcrystals. The strength of these gels is dependent largely on chain length.. This definition was provided by the American Association of Cereal Chemists at their 2000 Annual Meeting.

For some preferred embodiments, the extruded food product includes whole grain and up to 15% insoluble fiber and up to 15% soluble fiber. This preferred embodiment is not a high protein food product. The whole grain fraction of the extruded particle, such as a ball or nugget includes one or more of brown rice flour, whole grain yellow corn flour and whole oat flour as the whole grain fraction. The extruded food product includes inulin as the soluble fiber.

For some preferred embodiments, extrusion is performed in a twin screw extruder. For other preferred embodiments, extrusion is performed in a single screw. Extrusion is performed for some embodiments, using conventional techniques to obtain a food particle that defines air cells of a desired size. For one preferred embodiment, where the extruded particles are blended with other ingredients to form a larger food, such as a bar, the particles define air cells of a size and wall thickness that inhibits migration of liquids into the air cells.

Preferred food products described herein include Ready-to-Eat (RTE) foods, breakfast cereals, snack packs or pouches, trail mixes, clusters, nutritional bars and other products. These food products include extruded food particles described herein, having protein, insoluble and soluble fiber and other foods. For some embodiments, the extruded food product described herein is consumed as is. For other embodiments, a flavored coating is applied to the outside of the extruded food particulate and is then dried.

One RTE embodiment is a packet of food, including the extruded food product, wherein the food has a caloric value of 100 calories. This packet is an excellent source of soluble and insoluble fiber, and, for some embodiments about 10% of RDA. For some preferred embodiments, the end consumer may obtain up to 8-9 grams of fiber in one serving of 30 grams. The fiber includes a combination of insoluble and soluble prebiotic fiber. For most preferred embodiments, extruded food products include no more than five grams of protein per forty gram serving on an RTE basis.

For some embodiments, the extruded food embodiments include additional ingredients. For instance, some embodiments of the food embodiments include a nutrient powder blend that includes at least two micronutrients. In one preferred embodiment, at least one of the micronutrients is encapsulated. Micronutrients may be selected from vitamins, trace elements, nutraceuticals, red rice yeast (a source of cholesterol reducing statins), prebiotics, probiotics, isoflavones, phytochemicals, and mixtures thereof.

For some embodiments, micronutrients include blends such as a blend of B vitamins such as Vitamin B ₁, (thiamin), Vitamin B ₂ (Riboflavin), Vitamin B ₃, Vitamin B ₆, vitamin B ₁₂ (cyanocobalamin), Pantothemic acid, niacin, thiamin. The micronutrients can further include typical vitamins as Vitamin A, Vitamin D, Vitamin E, Thiamin, Riboflavin, Niacin, Pyridoxine, Pantothenic Acid, Cyanocobalamin, Folic Acid, and Biotin.

In other embodiments, the micronutrients include trace elements and minerals such as copper, iron, selenium, magnesium, manganese, zinc, and mixtures thereof. Conventional ingredients for vitamins and minerals can be employed to provide the desired trace elements. For example, iron can be provided by reduced iron, iron sulfite, ferric sodium pyrophosphate, and/or iron fumarate. Copper can be provided by Cu₂O, CuCl₂, CuSO₄ and mixtures thereof. Magnesium can be provided by MgO, MgCl₂, MgCO₂, Mg(OH)₂, Magnesium acetate and mixtures thereof. Zinc can be provided by, for example Zn-citrates, Zn-gluconates, Zn-stearates, Zn-amino acid chelates, Zn-ascorbates, and mixtures thereof.

In some preferred embodiments, the nutrients include sufficient amounts of vitamin and trace elements to provide 100% USRDA for such vitamins and minerals in about 5 to 15 g of extruded food particles for some embodiments and clusters that include the food particles for other embodiments. Some particle and cluster embodiments may have 100% USRDA of all essential vitamins and minerals in less than about 5 to 15 g of the particles or clusters.

Some extruded food embodiments include calcium as calcium phosphate. Calcium phosphate is generally available as a monobasic (CaH₄(PO₄)₂.H₂O), dibasic (CaHPO₄.2H₂O) or tribasic (Ca₃(PO₄) ₂) salts. Some extruded food embodiments use tricalcium phosphate, Ca₃(P0₄)₂, ("TCP") because of its high weight percentage of calcium (about 38%). Additionally, TCP is slightly more soluble than other calcium phosphate salts.

A useful tricalcium phosphate starting material is also known as tribasic calcium phosphate or tricalcium orthophosphate and is commercially available in food chemicals codex grade from Monsanto or Rhone Poulenc, having the general formula 3Ca₃(PO₄)₂.Ca(OH)₂. This product provides assayed calcium content of from 34 to 40% by weight. Another phosphate material is anhydrous dicalcium phosphate, also known as anhydrous dibasic calcium phosphate, having a formula of CaHPO₄. An anhydrous dicalcium phosphate material is also commercially available from Stauffer Chemicals in food chemical codex grade, providing an assay calcium content from about 30 to about 31.7% calcium by weight. Other calcium phosphate hydrates also can be useful, including, but not limited to, calcium pyrophosphate, calcium hexametaphosphate and monobasic calcium phosphate.

For some embodiments, the calcium material such as calcium carbonate and/or calcium phosphate salt has a particle size such that 90% has a particle size of less than 150 microns ("mm"), that is, a fine powder. For some embodiments, the calcium material has a particle size of less than 100 microns.

### Binder:

Preferred extruded food particle embodiments further include sufficient amounts of a binding agent to bind together the extruded food particles into clusters. The particular binding agent usage levels depend upon a variety of factors such as the desired textural properties in the finished product. Generally, however, good results are obtained when the food clusters made with particles that include the extruded food particles include about 15% to about 40% of the binder(s).

The art is replete with suitable binding agents and the skilled artisan will have no difficulty in selecting suitable binder (s) for use herein. Solutions or slurries can be prepared wherein various gums, such as guar, pectin, carragenan, xanthan, gellan, carboxy methylcellulose, proteins, such as gelatin, soy proteins, egg whites, hydrolyzed soy proteins, starches, such as pregelatinized, modified starches, are used as the binding agent. Other embodiments for use herein as the binding agents include nutritive carbohydrate sweetening agents, such as sucrose, dextrose, corn syrup, honey, fruit juices. For some embodiments, yogurt is included as a binder or as an ingredient in a binder.

The binder is typically applied dissolved or dispersed with the extruded food particles, in liquid form. Added moisture is then removed, for some embodiments, by drying. For some embodiments, the binder may be a powder

Certain binder embodiments can additionally include a fat (oil and/or solid) component. The fat component additionally affects the eating qualities of the food clusters made with extruded food particles bound by the binder. The fat ingredient can also assist in minimizing interaction between any oil soluble flavors included and the insoluble calcium ingredient. For some embodiments, having fat bearing binders, the binder is provided with liquid oil or fat heated to above its melting point.

Fat, if included in the binder, is present in a concentration of about 0.1 to 50%, of the extruded food particle that includes protein, soluble fiber and insoluble fiber. Both conventional fatty triglyceridic materials such as oils and solid fats can be used herein as well as blends of fats and oils or fats and sugars, or white chocolate. Also useful herein are fats, such as partially hydrogenated oils such as canola, corn oil, safflower, soybean, coconut, cottonseed or fractionated oils, all of which have melting points above room temperature. Also usable for some embodiments are animal derived fats. In other embodiments, the oils are selected to have and provide higher levels of medium chain triglycerides. While not proven and not universally accepted, it is believed by many in the art that the presence of medium chain triglycerides beneficially enhances the bioavailability of calcium phosphate salts possibly by increasing calcium absorption. A suitable oil that provides high levels of such medium chain triglycerides is canola oil.

In some embodiments, the fat component additionally includes lecithin and other emulsifiers, e.g., acetylated mono-glycerides, if desired. It is believed that there is a synergistic effect when both inulin and medium chain triglycerides are both present for the absorption of calcium from calcium phosphate salts.

For some embodiments, food clusters also include effective amounts of a flavor(s). Conveniently, the flavor(s) can be dispersed and evenly applied as part of the binder.

The food clusters that include extruded particles having protein, soluble fiber and insoluble fiber, are formed into suitably sized and shaped pieces. In one preferred embodiment, the pieces are bite sized ranging in weight from about 0.5 to 10 g. The pieces can, if desired, be imparted with a particular shape such as a ball or a nugget. The pieces can be of all one color or portions can be of additional colors.

One most preferred cluster embodiment includes particles having a protein source and at least two different fiber sources in concentrations effective for rendering the cluster as a high protein, high fiber food product. The protein may be one or more of soy, or other plant or dairy based proteins. Another most preferred cluster embodiment includes particles having a whole wheat source and at least two different fiber sources in concentrations effective for rendering the cluster as a high whole grain, high fiber food product. For both most preferred embodiments, the insoluble fibers include oat fiber, oat bran, and psyllium. The soluble, prebiotic fibers include inulin from chicory, agave, as well as polydextrose and resistant starches. In one embodiment, the concentration of a high quality protein in the cluster is 5.0 grams or more and the amount of fiber is 3.0 grams or more. The particles are bound by a binder such as is described herein. The cluster may include additional ingredients and particles. The total weight of the of the cluster product is 40 grams. These quantities enable a manufacturer to place health claims on a product label, under current law. These embodiments are usable in RTE cereal, portable snacks, coated and uncoated, trail mixes, and other, similar products.

Particles bound to make the clusters include one or more of extruded particles having protein, soluble fiber and insoluble fiber described herein, and other particles that include one or more of dried fruit, nuts, and seeds. One or more of the particles may be coated with an edible coating. The cluster is also coated for some embodiments. The extruded particles may be one or more of expanded crisp, ball, and nugget. For some embodiments, the cluster encloses a nugget.

### R-T-E Food Blends

The food clusters that include extruded food particles described herein can be used and consumed themselves as an RTE food or cereal based snack or as a topical additive for other food products, such as ice cream, yogurt or admixed therewith to make a nutritionally fortified frozen dairy treat. In still other embodiments, the clusters can be added to dry mixes for baked goods. In still another uses, the clusters can be added together with dried seasoned bread pieces for stuffing mixes or as salad toppings. The clusters can be combined with other snack ingredients e.g., pretzels, for including into snack mixes.

The food clusters are also usable for use for admixture with conventional RTE foods to provide nutritionally fortified blended RTE food products. Any conventional RTE food whether or not nutritionally fortified can be used as the RTE cereal base of such blended RTE food products. Such RTE cereal base can be in the form of flakes, shreds, biscuits, puffed pieces and mixtures thereof. The RTE cereal base can be topically sweetened, for some embodiments, with a yogurt-based coating. For some embodiments, RTE cereal bases are fabricated from cooked food doughs comprising about 1% to 40% of the RTE food base of a soy ingredient selected from the group that includes soy flour, soy protein, soy protein isolate, and mixtures thereof. Weight ratio of food clusters to RTE food base ranges from about 1:50 to about 50:1.

### Additional Particulates

If desired, the nutritionally fortified blended RTE food products can further include additional particulates intended to enhance the flavor and appeal of the RTE food products. Such supplemental, preferred additives can include dried fruit pieces, such as raisins, apricots, figs, dates, nuts, candies or confections, such as dried marshmallow pieces and mixtures thereof.

Typically such supplemental particulates are characterized by a larger particles size that the particulates from which the grain-based food clusters are prepared. The supplemental particulates generally are characterized by piece counts ranging from about 300 to 1,500 per pound. If present, such supplemental particulates can be present in the fortified RTE food products in a weight ratio of supplemental particle to food base ranging broadly from about 1:10 to about 1:1, preferably about 1:5 to 1:1. It will be appreciated that, for some embodiments, such supplemental particulates will generally be smaller in size than the present nutrient clusters.

In one preferred embodiment, the RTE food blends include "Null clusters" or unfortified clusters having a similar shape, size and formulation as the food clusters including nutrients, except for the absence of the added fortifiers.

In one preferred embodiment, the RTE includes food clusters that include yogurt. For some embodiments, the yogurt is a component of a coating that coats the cluster. For other embodiments, the yogurt is included in the binder that binds the food particles together to make the cluster. For other embodiments, the yogurt is a component of both the coating and the binder.

For some embodiments, the RTE also includes food particles that are not clusters and that are coated with a coating that includes yogurt. Exemplary embodiments include the following

**Example 1**

One embodiment includes 7 grams of soy protein and 4.25 grams of a combination of insoluble fiber and soluble fiber for each ounce, 28.3 grams, of extruded product. Another preferred embodiment includes 5.3 grams of insoluble fiber and soluble fiber for each ounce, 28.3 grams, of product. Each ounce has a caloric value of about 100 calories. Some extruded food embodiments have a particle form, with multiple particles falling within 28.3 grams. The particles may be balls or nuggets or irregular particles. For some embodiments, the particles are coated. Some embodiments also include whole grain and are coated.

In one preferred embodiment, the particles that include protein, soluble fiber and insoluble fiber are mixed with flakes, nuts, and, for some embodiments, dried fruit to form a cluster or other larger RTE food.

### Process for Making the Food Cluster:

For some embodiments, a mixture that includes at least a protein source described herein, a soluble fiber and an insoluble fiber, and a source of fat is conveyed by a screw through a screw type extruder without an addition of an external source of heat. Any temperature increase of the mixture is due to shear generated by the extruder. The outlet temperature typically ranges from about 80°F to 110° F. For some embodiments, the outlet temperature may be as high as 160°F. Temperature rise of the mixture within the extruder is reduced by fat in the mixture which acts to "grease" the mixture through the extruder, thereby reducing shear and heat evolution. The fat concentration ranges from about 0 to 8 percent by weight of the mixture. Commonly employed fat concentration ranges from about 1 to 4 percent by weight of the mixture. Fat is added primarily for lubricity during extrusion. Fat may also be added in order to create a desired mouthfeel for some product embodiments. The extruded mixture is cut to form extruded particles.
For some embodiments, the extruded particles or clusters of extruded particles that include protein, soluble fiber and insoluble fiber are at least partially coated with a binder. For some embodiments, the particles include at least one structural feature that imparts fragility to the particle. Structural features include brittle edges, corners, angular structures, and cellular structures.

For some embodiments, the food particles are positioned on a belt to form a product band. The binder is applied, for some embodiments, with a spray delivered by one or more revolving plates in a revolving plate system. The revolving plate system does not include any jets or nozzles. For some embodiments, revolving plates are positioned both above and below a product band to give total binder coverage. For some preferred embodiments, micronutrients which have been described herein are added to the food particles as a powder applied by the revolving plate system. Additional information regarding the revolving plate system is described below.

A food cluster mixture is then optionally formed into a desired shape. For example, the mixture may be rolled into sheets of around 1-5mm. thickness and distinct shapes (such as bars, discs, squares, triangles) stamped out. Alternatively, the mixture may be shaped to form a loose sheet which is then broken into bite-size clusters.

The shape formed, for some embodiments, is heated. This heating has the effect of drying the mixture. The heating takes place with air flow. The temperature is between around 100-200'C. Baked flavors may be developed by the heat. Other embodiments do not include a heating step.

Flavorings may be added to the binder or to the other food cluster ingredients before or after binding the food particles to form clusters and before or after heating. For some embodiments, flavorings, such as savory flavourings, are added to the snack food after heating, when the product surface is still hot.

For some preferred embodiments, the clusters are coated with a coating using the revolving plate system. For some embodiments, the coating includes yogurt.

The food clusters, for some more preferred embodiments, presented in distinct shapes with defined outlines, such as disks, hoops, spiral, twisted rectangles, curls or clusters. As discussed, the food clusters include a delicate structure. For some embodiments, the food clusters have a low density as well as being thin in shape

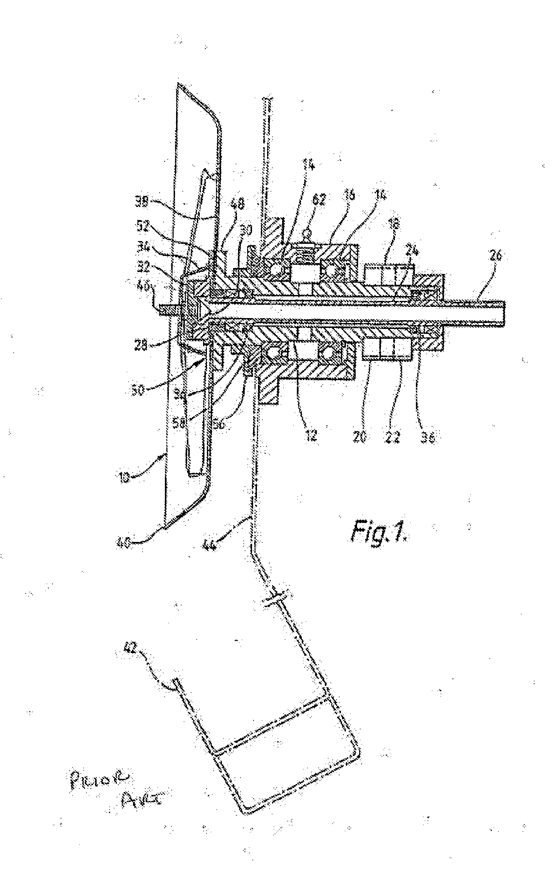

The revolving plate system is a known, prior art system where a spindle 12 and a disc 10, shown in FIG. 1, are rotated. Fluid to be sprayed is passed through a feeder tube 24 to impinge on the conical valve member 30. When the fluid flow rate is considerable, the valve member 30 deflects the flow outwardly and the fluid then hits the diffuser plate 34 and is deflected outwardly towards the surface 38 of the disc 54. When the fluid hits the disc it is caused to move outwardly as a result of the centrifugal force exerted by the revolving plate. The fluid then travels over the surface 38 until it leaves the periphery 40 of the disc and is thrown outwardly.

The spraying device comprises a disc 10 which is detachably secured to one end of a hollow spindle 12 which extends through and is rotatably mounted via two spaced deep groove ball bearing assemblies 14 in a housing 16. The other end of the spindle 12 includes a pulley 18 having two adjacent V-groove sections 20 and 22 arranged to receive different V-groove belts. A grease nipple 62 is provided for lubrication of both bearing assemblies 14.

A feeder tube 24 extends throughout the spindle 12 and includes, at its end remote from the disc, an attachment point 26 for a source of fluid or mixture to be sprayed and, at its opposite end, it extends through a self lubricating bronze bearing 28 and its end opens onto a conical valve member 30 which is threadably mounted on a holder 32. The feeder tube cooperates with the spindle 12 via a pair of deep groove ball bearing assemblies 36.

Lip seals are provided for both sets of the deep groove ball bearing assemblies.

In use, the spindle 12 and disc 10 are rotated by a drive belt cooperating with the V-groove section 20 of the pulley 18. Fluid is passed through the feeder tube 24 to impinge on the stationary conical valve member 30.

When the fluid flow rate is considerable, the valve member 30 deflects the flow outwardly through passages (not shown) in the holder or end of the feeder tube and the fluid then hits a rotating diffuser plate 34 and is then deflected back and outwardly towards the surface 38 of the disc. When the fluid hits the disc it is caused to move outwardly as a result of the centrifugal force exerted by the revolving plate. The fluid then travels over the surface 38 until it leaves the periphery 40 of the disc and is discharged tangentially.

When the fluid flow rate is relatively low, the fluid hits the stationary valve member 30 and is caused to travel outwardly directly onto the surface 38 of the disc without passing to the diffuser plate 34. The valve member then may build up a slight back pressure in the feeder tube 24 to smooth out any pulses which may occur in the pressure of the fluid being supplied.

Excess fluid is caught in a drain channel 42 located beneath the disc and secured to the housing by an upwardly extending plate 44 which is connected to the housing.

The spraying device is normally used to spray articles carried past a spraying area by a conveyer. Where the conveyer is a chain conveyor it may be required to spray articles on the conveyor from above and below in which case, for instance, four spraying devices may be located above, and four devices below the conveyor. The four devices above the conveyor may be located in a line across the direction of travel of the conveyor, with the discs being arranged to spray towards and across the centre of the conveyor (that is to say the two discs on one side of the centre line spray towards the discs on the other side). The devices beneath the conveyor may be arranged in a similar manner.

It will be appreciated that, in order to avoid waste of the material being sprayed and in order to ensure even spraying or coating of products it is desirable to be able to control the spray from each disc. Thus the individual valve members 30 associated with each disc 10 can be moved towards or away from the open end of the feeder tube 24 by causing rotation of the slotted end 46 to control the rate at which fluid is sprayed from the associated disc. Accordingly each spraying device can be connected to a common source of fluid. Furthermore, each disc has associated therewith a mask which partially surrounds the disc to allow sprayed fluid to be collected from the periphery of the disc which would not be sprayed onto the products.

As the spraying device includes a pulley for cooperation with a V-belt, the motor causing rotation of the disc can be positioned remote from the spraying device. Furthermore a single motor can cause the rotation of two or more devices by positioning a further V-belt around the V-groove section 22 and connecting that belt either directly or indirectly to the pulley of another spraying device. A further belt can then be secured to the other V-section of that pulley for driving another spraying device.

Different discs may be desired to be used on the spraying devices either because of their location, or in dependence upon the material being sprayed, the spraying effect to be achieved or the fluid being sprayed. Consequently the discs are detachably mounted on a flange 48 on the end of the spindle via bolts (not shown) which pass through spaced tabs 52 of the diffuser 34. The diffuser 34 may be pivotally or detachably mounted on the disc.

In order to prevent or inhibit the fluid from entering the bearing assemblies 14, the housing includes a lip 56 which extends away from the disc and surrounds a seal 58.

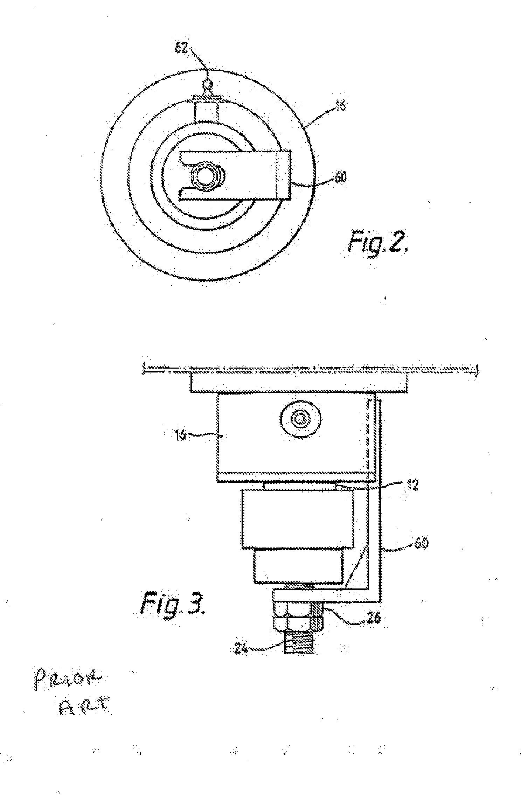

A brace member 60, shown in Figures 2 and 3, is secured to the housing 16 and the attachment point 26 of the feeder tube 24 to prevent the tube from rotating with the hollow spindle 12.

The foregoing description of embodiments has been provided for the purposes of illustration and description. It is not intended to be exhaustive or to limit the invention to the precise forms disclosed. It is intended that the scope of the invention be defined by the following claims and their equivalents.

## Claims

1. An extruded food product comprising:
a soy protein;
an oat-derived insoluble fiber; and
a soluble fiber, comprising inulin in a concentration of 0.15 to 50% by weight.

2. The extruded food product of claim 1, wherein the insoluble fiber concentration is within a range of about 7% by weight to about 15% by weight; and the soluble fiber concentration is within a range of about 7% to 15% by weight.

3. The extruded food product of claims 1 or 2 further comprising whole grain, comprising one or more of brown rice flour, whole grain yellow com flour and whole wheat flour.

4. The extruded food product of claims 1-3, wherein the extruded product is one or more of an expanded crisp, ball, nugget.

5. The extruded product of claims 1-4, further comprising fat in a concentration of 0.1 to 50% by weight.

6. A ready-to-eat food product comprising:
an extruded food product according to claim 1
a binder; and
a cereal.

7. The food product of claim 6, wherein the ratio of extruded food product to cereal is 1:5 to 1:1.

8. The food product of claims 6 and 7, wherein the concentration of insoluble fiber is in a range of about 7% to 15% by weight and the concentration of soluble fiber is in a range of about 7% to 15% by weight.

9. The extruded food product of claim 1, wherein the protein concentration of the extruded food product is no more than five grams of protein per each forty gram extruded food product serving.

10. The extruded food product of claim 1, wherein the soy protein is a soy protein isolate.

11. The extruded food product of claim 1, sized to include expanded crisps, balls, nuggets and other types of particles.

12. The extruded food product of claim 1, defining air cells sized to inhibit migration of liquids into tie air cells.

13. The extruded food product of claim 1, further comprising one or more micronutrients.

## Patentansprüche

1. Extrudiertes Nahrungsmittelprodukt, umfassend:
ein Soja-Protein,
eine von Hafer stammende, unlösliche Faser und
eine lösliche Faser, die Inulin in einer Konzentration von 0,15 bis 50 Gew.-% umfasst.

2. Extrudiertes Nahrungsmittelprodukt nach Anspruch 1, wobei die Konzentration der unlöslichen Faser in einem Bereich von etwa 7 Gew.-% bis etwa 15 Gew.-% liegt und die Konzentration der löslichen Faser in einem Bereich von etwa 7% bis 15 Gew.-% liegt.

3. Extrudiertes Nahrungsmittelprodukt nach Anspruch 1 oder 2, ferner Vollkorn umfassend, das eines oder mehrere der Folgenden umfasst: Naturreismehl, Gelbmais-Vollkornmehl und Weizenvollkornmehl.

4. Extrudiertes Nahrungsmittelprodukt nach Anspruch 1 bis 3, wobei das extrudierte Nahrungsmittelprodukt eines oder mehrere der Folgenden ist: ein geblähter Chip, eine geblähte Kugel, ein geblähtes Nugget.

5. Extrudiertes Nahrungsmittelprodukt nach Anspruch 1 bis 4, ferner Fett in einer Konzentration von 0,1 bis 50 Gew.-% umfassend.

6. Verzehrfertiges Nahrungsmittelprodukt, umfassend:
ein extrudiertes Nahrungsmittelprodukt nach Anspruch 1,
ein Bindemittel und
eine Zerealie.

7. Nahrungsmittelprodukt nach Anspruch 6, wobei das Verhältnis des extrudierten Nahrungsmittelprodukts zur Zerealie 1:5 bis 1:1 beträgt.

8. Nahrungsmittelprodukt nach Anspruch 6 und 7, wobei die Konzentration der unlöslichen Faser in einem Bereich von etwa 7 Gew.-% bis 15 Gew.-% liegt und die Konzentration der löslichen Faser in einem Bereich von etwa 7% bis 15 Gew.-% liegt.

9. Extrudiertes Nahrungsmittelprodukt nach Anspruch 1, wobei die Proteinkonzentration des extrudierten Nahrungsmittelproduktes nicht mehr als fünf Gramm Protein pro Vierzig-Gramm-Portion des extrudierten Nahrungsmittelproduktes beträgt.

10. Extrudiertes Nahrungsmittelprodukt nach Anspruch 1, wobei das Soja-Protein ein Soja-Protein-Isolat ist.

11. Extrudiertes Nahrungsmittelprodukt nach Anspruch 1, das derart bemessen ist, dass es geblähte Chips, Kugeln oder Nuggets und andere Arten von Partikeln beinhaltet.

12. Extrudiertes Nahrungsmittelprodukt nach Anspruch 1, das Luftzellen bildet, die derart bemessen sind, dass sie die Migration von Flüssigkeiten in die Luftzellen hemmen.

13. Extrudiertes Nahrungsmittelprodukt nach Anspruch 1, ferner ein oder mehrere Spurenelemente umfassend.

## Revendications

1. Produit alimentaire extrudé comprenant :
une protéine de soja ;
une fibre insoluble dérivée de l'avoine ; et
une fibre soluble, comprenant de l'inuline dans une concentration de 0,15 à 50 % en poids.

2. Produit alimentaire extrudé selon la revendication 1, dans lequel la concentration en fibres insolubles est comprise dans un intervalle d'environ 7 % en poids à environ 15 % en poids ; et la concentration en fibres solubles est comprise dans un intervalle d'environ 7 % à 15 % en poids.

3. Produit alimentaire extrudé selon la revendication 1 ou 2 comprenant un grain complet consistant en une ou plusieurs farines parmi la farine de riz brun, la farine de maïs jaune complète et la farine de blé complète.

4. Produit alimentaire extrudé selon les revendications 1 à 3, le produit extrudé consistant en un ou plusieurs produits parmi une chips, une boule ou une pépite expansée.

5. Produit extrudé selon les revendications 1 à 4, comprenant en outre de la graisse dans une concentration de 0,1 à 50 % en poids.

6. Produit alimentaire prêt à consommer comprenant :
un produit alimentaire extrudé selon la revendication 1 ;
un lieur ; et
une céréale.

7. Produit alimentaire selon la revendication 6, dans lequel le rapport du produit alimentaire extrudé et de la céréale est de 1:5 à 1:1.

8. Produit alimentaire selon les revendications 6 et 7, dans lequel la concentration en fibres insolubles est comprise dans un intervalle d'environ 7 % à 15 % en poids, et la concentration en fibres solubles est comprise dans un intervalle d'environ 7 % à 15 % en poids.

9. Produit alimentaire extrudé selon la revendication 1, la concentration en protéines du produit alimentaire extrudé n'excédant pas cinq grammes de protéine par quarante grammes de produit alimentaire extrudé servi.

10. Produit alimentaire extrudé selon la revendication 1, dans lequel la protéine de soja est un isolat de protéine de soja.

11. Produit alimentaire extrudé selon la revendication 1, dimensionné pour inclure des chips, des boules ou des pépites expansées et d'autres types de particules.

12. Produit alimentaire extrudé selon la revendication 1, définissant des cellules d'air dimensionnées de façon à empêcher la migration de liquides dans les cellules d'air.

13. Produit alimentaire extrudé selon la revendication 1, comprenant en outre un ou plusieurs micronutriments.
